# EUROPEAN PATENT SPECIFICATION

(11) **EP 1 936 766 B1**
(45) Date of publication and mention of the grant of the patent: **12.06.2013**
(21) Application number: 08152823.4
(22) Date of filing: 11.09.1998
(51) Int. Cl.: H02G 3/38

(54) **Raised floor system and support apparatus**
Angehobenes Bodensystem und Stützvorrichtung
Système de plancher surélevé et appareil support

(30) Priority: 11.09.1997 US 927506; 28.10.1997 US 63426 P
(43) Date of publication of application: 25.06.2008
(62) Divisional of application: 98946970.5
(73) Proprietor: Jette, Roger, Babylon, NY 11702 (US)
(72) Inventor: Jette, Roger, Babylon, NY 11702 (US)
(74) Representative: Olsson, Jan

(56) References cited:
- US-A- 4 676 036
- US-A- 4 850 162
- US-A- 5 477 649

## Description

### BACKGROUND

### 1. Technical Field

The present disclosure relates to raised floor systems and more particularly to a cable support assembly for use in connection with a raised floor system.

### 2. Description of Related Art

Raised floor systems have been developed to provide the additional utility space needed in various different conduit or cable intensive environments where the original construction did not provide adequate means of accommodating the vast amount of conduit or cable. For example, probably the most common environment requiring vast amounts of additional protected space is for large computing systems. Such installations were typically made in facilities which simply were not designed to accommodate the vast amount of cable runs required to operate the typical large computer system. Other applications where additional utility space is required include mechanical systems, e.g., heating, ventilating and air conditioning systems.

A common problem experienced in utilizing raised floor systems is maintaining organization of the various cables, conduits, pipes, etc. which are routed beneath the floor system. One solution to this problem is to provide a cable tray system beneath the floor panels of the raised floor to contain and direct cables along their respective pathways. An example of such a cable tray system is disclosed in U.S. Patent No. 4,596,095 which issued on June 24, 1986 to Chalfant (the "'095 Chalfant Patent"). The '095 Chalfant Patent features a modular cable tray assembly which is formed from modular sections which include a number of different components all of which must be separately assembled to form the cable tray. For example, the cable tray includes separate straight sections, horizontal bend sections, horizontal tee sections, horizontal cross-intersection sections, as well as splice plates to connect the various components to each other as well as supporting the assembled cable tray above the building floor. Such a cable tray assembly is, therefore, independent of the raised floor system.

One drawback of such a raised floor and cable support system is the additional labor required to assemble the various components of the separate raised floor and cable support systems. In geographic regions with particularly high labor rates, the cost of erecting such a labor intensive dual system could prove to be cost prohibitive.

Another drawback of such a system is that the amount of space required by the structural supporting components of the two separate systems leaves less space available for carrying and organizing larger numbers of cable runs.

Yet another drawback of installing independent raised floor and cable support systems is the cost of procuring the materials required for two separate support structures. These additional labor and material costs can significantly increase the overall cost of installing a complete system.

An alternative solution to supporting cable runs below a raised floor assembly is proposed in U.S. Patent No. 5,548,932 which issued on August 27, 1996 to Mead (the "'932 Mead Patent"). The '932 Mead Patent features a height adjustable cable tray support system which includes a number of separate components which must be assembled to form the cable support system. Plates which support the cable tray are secured by welding or other methods to the pedestals of the existing raised floor system featured in the '932 Mead Patent. Additionally, support rods are required in the '932 Mead Patent cable tray support system, which support the cable tray on the support plates.

One disadvantage of such a system is the labor intensive nature of the installation. In particular, each support plate must be separately secured to the floor system pedestals and the support rods and cable tray sections must be installed. This combined with the cost of the material components required for such a system can add significant cost to the installation of the complete system.

The support apparatus for use with the raised floor system according to the preamble of appended claim 1 is known through US-A-4676036, which has cable trays or tables arranged beneath the upper floor panels with the drawbacks mentioned above.

### SUMMARY OF THE INVENTION

The object of the present invention is to provide a support apparatus for use with a raised floor system of the type defined in US-A-4 676 036, being modified with respect to that known system in order to obtain an improvement in at least some aspect with respect to that apparatus.

This object is according to the present invention obtained by providing a support apparatus according to appended claim 1.

Accordingly, by providing said first and second end portions of each support bracket with notches in the lower edge thereof, a said bracket portion on a portion of the support pedestal and configuring said notches to align with respective bracket portions for making the notches resting on the respective bracket portions by lowering the support bracket, an efficient and very reliable interconnection of the components of said raised floor system may be achieved by simple means. Furthermore, by the provision of said depending article support members organization of cables and the like under the floor surface may be obtained by very simple means.

The channel section may be formed of an open architecture defining a plurality of openings therein. Additionally, the channel section may be formed of wire stock. The channel section may further include a plurality of support members extending from the first elongated stringer element to the second elongated stringer element.
In such an arrangement, the plurality of support members are preferably maintained at a predetermined distance from each other.

The channel section may be suspended from the first and second elongated stringers by permanently securing the channel section to the first and second elongated stringers.

### BRIEF DESCRIPTION OF THE DRAWINGS

Preferred embodiments of the presently disclosed raised floor system and cable support assembly are described herein with reference to the drawings, wherein:
FIG. 1 is a perspective view of one embodiment of a raised floor system constructed in accordance with the present disclosure;
FIG. 2 is a perspective view of a cable support assembly embodiment constructed in accordance with the present disclosure;
FIG. 2A is a perspective view of an alternative embodiment of a cable support assembly constructed in accordance with the present disclosure;
FIG. 3 is a side view of the cable support assembly of FIG. 2 in place in a raised floor system;
FIG. 4 is an enlarged partial perspective view of a cable support assembly in a raised floor system of the present disclosure;
FIG. 5 is a side view showing the cable support assembly partially cut away as installed in the raised floor system of the present disclosure;
FIG. 6 is a perspective view of a further embodiment of the presently disclosed cable support assembly;
FIG. 7 is a side partial view of an alternative embodiment for mounting the cable support assembly to stringers of a raised floor system;
FIG. 8 is a side partial view of a further alternative embodiment for mounting the cable support assembly to stringers of a raised floor system;
FIG. 9. is a perspective view with parts separated of one embodiment of a secondary support apparatus and components of a raised floor assembly, constructed in accordance with the present disclosure;
FIG. 10A is a top view of a bearing surface of a support pedestal;
FIG. 10B is a top view of a bearing surface of a further support pedestal;
FIG. 11 is a side view of an assembly sequence of a secondary support apparatus;
FIG. 12 is a side view of a further assembly sequence of a support apparatus;
FIG. 13 is a side view of a further assembly sequence of a support apparatus;
FIG. 14 is an enlarged partial perspective view showing one end of a secondary support apparatus assembled in a raised floor support system;
FIG. 15 is a perspective view with parts separated of a further embodiment of a secondary support apparatus and components of a raised floor assembly, constructed in accordance with the present disclosure;
FIG. 16 is a perspective view of an alternative embodiment of a cable support assembly incorporated in a raised floor support system constructed in accordance with the present disclosure;
FIG. 17 is a perspective view with parts separated of one section of a cable support assembly of the embodiment of FIG. 16; and
FIG. 18 is a perspective view of an alternative embodiment of a cable support assembly section constructed in accordance with the present disclosure.

### DETAILED DESCRIPTION OF PREFERRED EMBODIMENTS

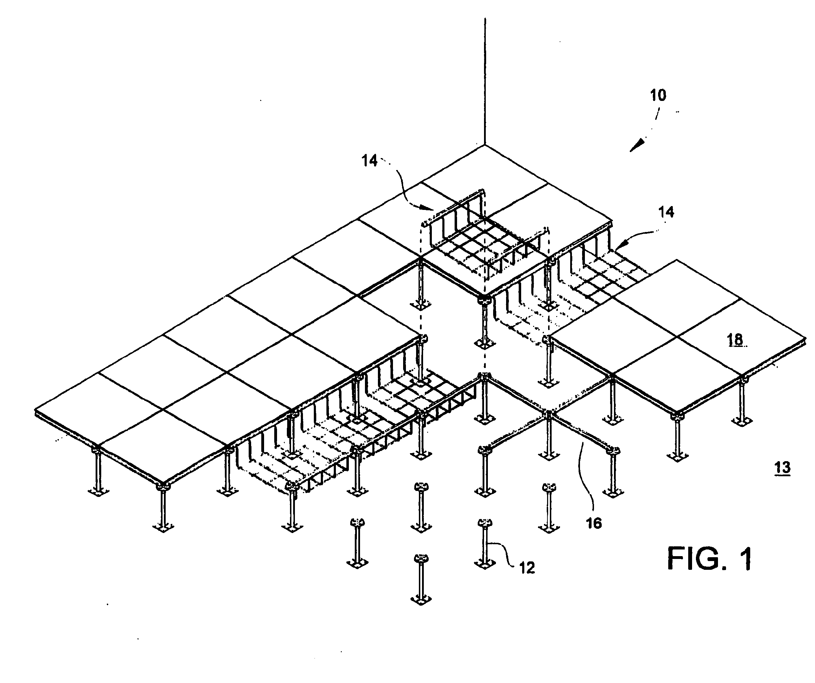

Referring now in specific detail to the drawings in which like reference numerals identify similar or identical elements throughout the several views, and initially to FIG. 1, one embodiment of a raised floor system constructed in accordance with the present disclosure is shown generally as raised floor system 10.

Generally, raised floor system 10 includes a series of support pedestals such as stanchions 12 which are disposed in a predetermined array on a base such as floor 13. A cable support assembly is provided in raised floor system 10 and includes a series of cable support apparatus such as cable baskets 14 which are disposed relative one another to form a predetermined passageway for carrying cables or the like thereon. Preferably cable baskets 14 form an integral part of floor system 10. Stanchions 12 are interconnected by stringer members 16 so as to define a lattice work which receives individual floor panels 18 therein to form the completed raised floor system 10.

In certain installations it may be desirable or necessary to install the cable support assembly as a stand-alone modular assembly. It is within the scope of the present disclosure, that in such an installation, cable baskets 14 will be supported a predetermined distance above the building floor 13 by independent stanchions 12 or other suitable supports which are not also used to support the raised floor system 10.

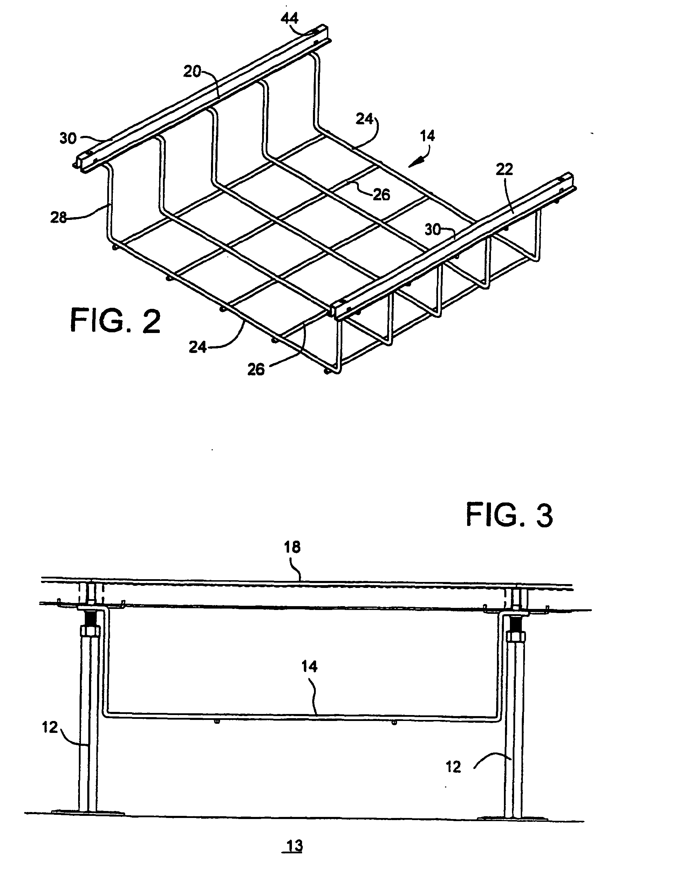

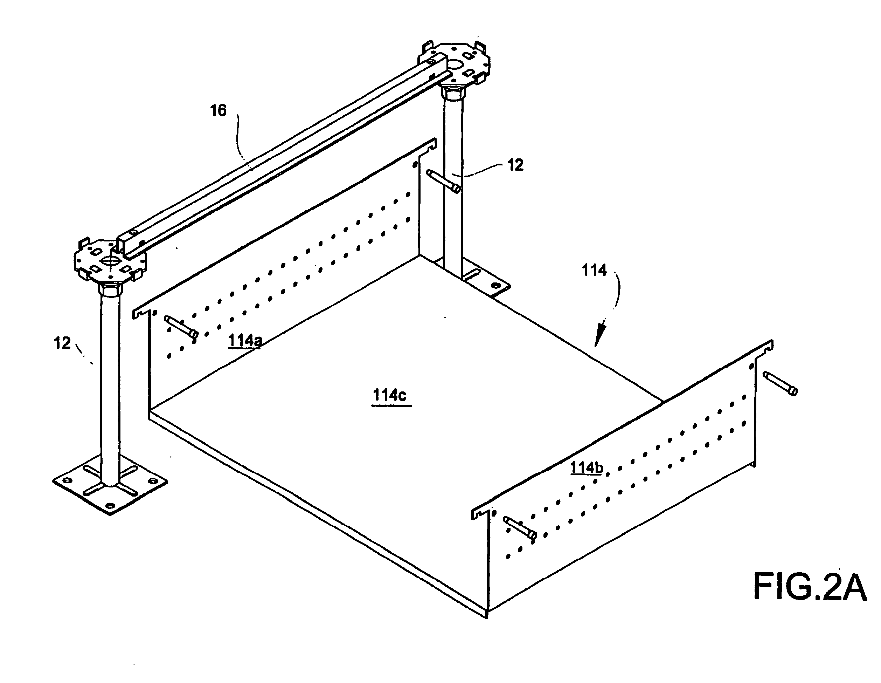

Referring now to FIG. 2, cable basket 14 includes first and second elongated stringer elements 20 and 22, respectively. A channel section is suspended from stringers 20 and 22 so as to form a portion of a passageway for supporting cable runs thereon. In the illustrated embodiment, the channel section is formed of an open ended wire stock basket having longitudinal sections 26 attached to transverse sections 24. Transverse sections 24 include riser portions or legs 28 which are attached to the underside of stringers 20 and 22. The various elements of cable support assembly 14 are preferably joined by suitable known techniques, such as by welding.

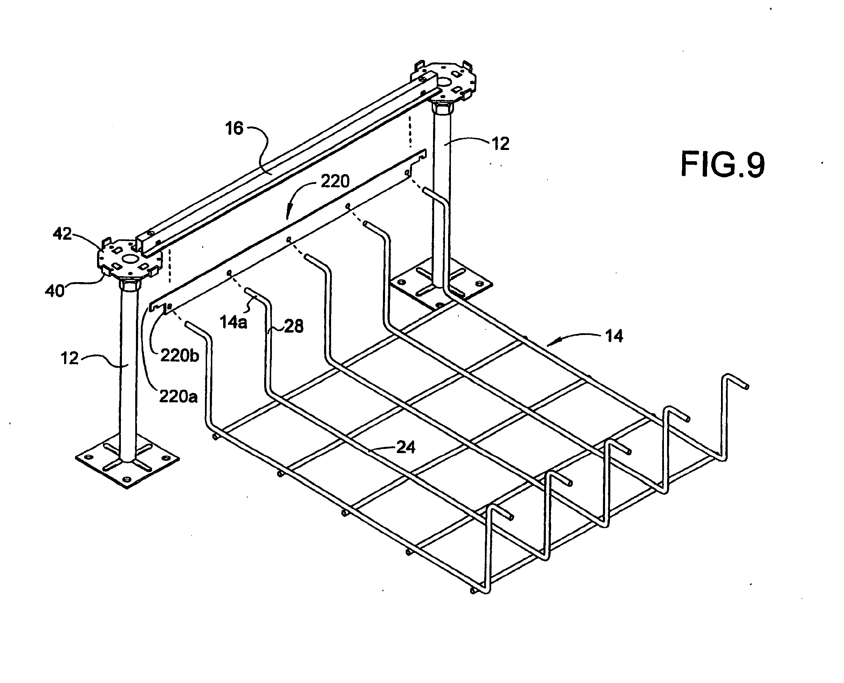

Although the illustrated channel sections are formed of wire stock material, it is within the scope of the present disclosure to use other materials as well. For example, the channel section may be formed of solid or woven fabrications of various metals or any other material suitable for supporting cable runs thereon. One illustrative example of such an alternative channel section is shown in FIG. 2A wherein channel section 114 includes vertical side wall portions 114A and 114B which extend upwardly from a central horizontal bottom panel 114C. Such a channel section 114 may be particularly useful in supporting equipment or the like above the base or building floor. Also illustrated in FIG. 2A is an alternative mounting system which will be described in greater detail in connection with the embodiment of FIGs. 9-14.

Referring now to FIGs. 3-5, the integration of cable baskets 14 into raised floor system 10 will now be described in detail. Preferably, a single section of cable basket 14 is supported by four stanchions 12 (as shown in FIG. 1). However, it is within the scope of the present disclosure that cable baskets 14 may be modified so as to be supported by more or less than four stanchions 12.

As shown in FIG. 3, cable baskets 14 are supported by stanchions 12 such that the longitudinal and transverse elements 26 and 24 respectively are spaced a predetermined distance from the permanent floor 13. When installed, cable baskets 14 do not interfere with the placement or fit of floor panels 18. Rather, cable baskets 14 are designed to be incorporated into existing raised floor systems without departing from the factory design specifications of the floor system. For such installations, cable baskets 14 replace parallel end to end links of stringers 16 from the existing raised floor system.

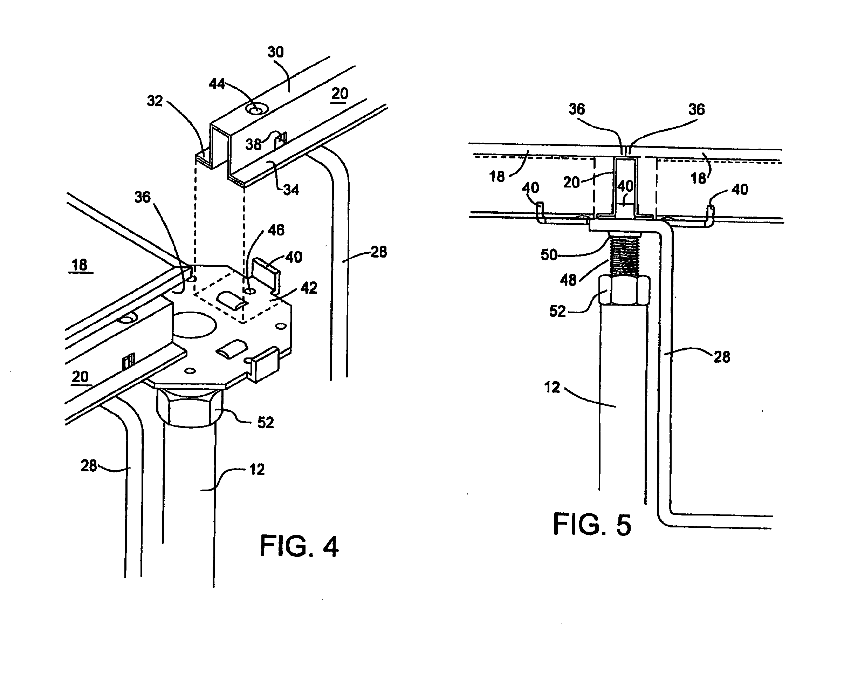

As shown in FIG. 4, cable support assembly sections 14 include stringer elements such as stringers 20 and 22 which have a cross sectional "top hat" shape that includes an inverted U-shaped cross section portion having flanges 32 and 34 formed on either side. Horizontal surface 30 forms the uppermost surface of stringers 20 and 22. It is on surface 30 which a peripheral flange 36 formed on floor panels 18 rests. As best illustrated in FIG. 5, the peripheral flanges 36 of adjacent floor panels 18 are both supported by a single stringer element 20 or 22 on surface 30. In order to maintain the relative positioning of stringer elements 20 and 22 with respect to stanchion 12, stringer elements 20 and 22 are provided with notched portions 38 which are configured and dimensioned to fit over bracket portions 40 of stanchion base plate 42.

Stringer elements 20 and 22 are further provided with preformed holes 44 which when properly installed are vertically aligned with preformed holes 46 formed in stanchion base plate 42. In this manner, stringer elements 20 and 22 may be secured to stanchion 12 to provide added structural integrity to the overall system. As is common in conventional floor systems, floor system 10 is preferably provided with a height adjustment mechanism to adjust the height of stanchion base plate 42 in order to accommodate slight variances in the subfloor 13. This height adjustment capability may be facilitated by, for example, threaded stud 48 being received in a threaded bore 50 formed in base plate 42 at one end and in a threaded opening of stanchion 12. A nut 52 is provided and is threaded around stud 48 positioned adjacent the top of stanchion tube to facilitate adjustment and locking of the vertical positioning of base plate 42.

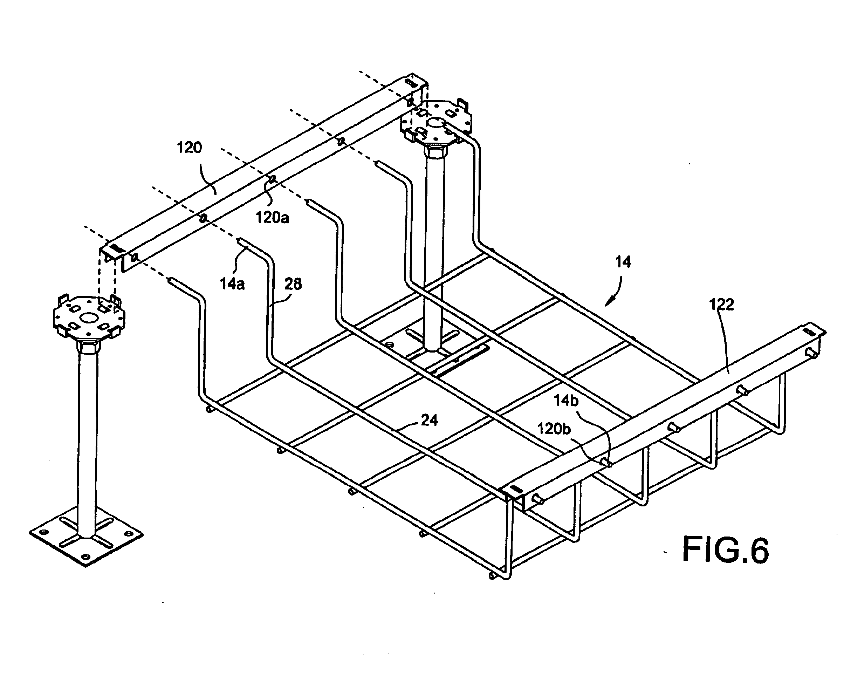

Referring to FIG. 6, an alternative method of attaching the cable basket to the stringers is shown wherein cable basket 14 has portions 14a and 14b which are formed extending outwardly from the upper portions of riser legs 28. Stringers 120 and 122, which are otherwise the same as stringers 20 and 22, are provided with a series of through-holes 120a and 120b, respectively, which may be punched out during formation of the stringers. In this manner, cable basket 14 may be suspended from stringers by inserting leg portions 14a and 14b in through-holes 120a and 120b. It is envisioned that all of the stringers of a raised floor system may be provided with through-holes similar to 120a and 120b so that a cable support system may be installed at any time and placed between any parallel rows of stringers having such support holes.

Alternatively, in existing raised floor systems which do not already have stringers with pre-formed cable basket receiving holes, such as holes 120a and 120b, the stringers positioned where it is desired to support a series of cable baskets 14 could be replaced with stringers having the pre-formed holes.

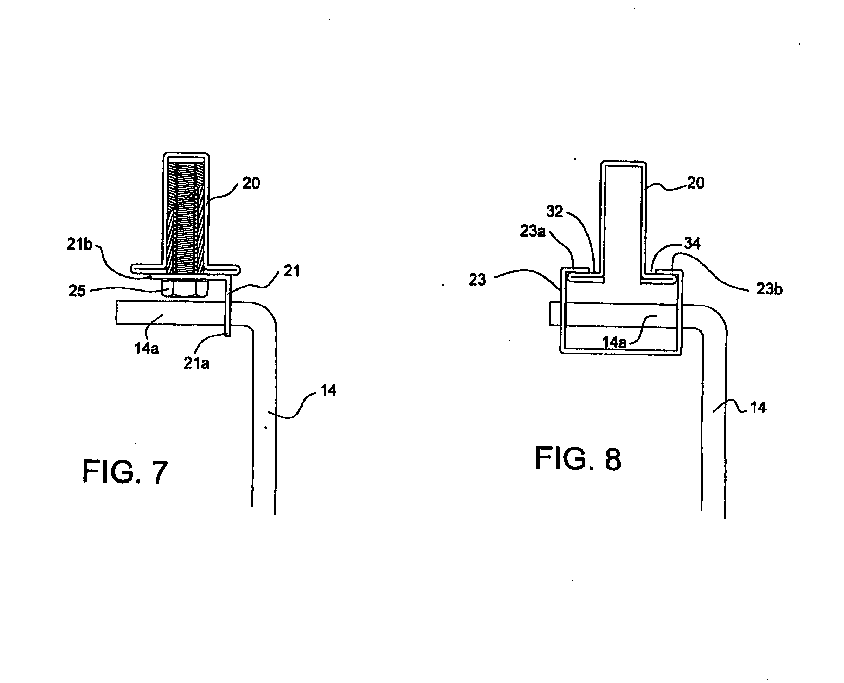

Referring to FIG. 7, in another alternative embodiment for suspending cable baskets 14 from stringers 20, angled brackets 21 are provided which have leg portions 21a and 21b. Leg portion 21a includes a through hole (shown in phantom lines) which receives leg portion 14a of cable basket 14. Leg portion 21b is bolted into the channel formed in the underside of stringer 20 by an expanding fastener such as wedge-bolt 25.

Referring to FIG. 8, in a still further alternative embodiment for suspending cable baskets 14 from stringers 20, a series of clips 23 are positioned on stringers 20 by having leg portions 23a and 23b rest upon flanges 32 and 34, respectively. Leg portions 14a of baskets 14 are inserted into receiving holes formed in clips 23. Thus, baskets 14 are suspended from clips 23. In this manner, existing floor system stringers could be utilized to support the added cable baskets defining the cable support assembly.

Referring now to FIGS. 9-14, a secondary support apparatus for use in conjunction with a raised floor system will now be described in detail. A support bracket 220 is provided which is configured and dimensioned to support an article support member such as basket 14. Basket 14 has been described with respect to previously described embodiments of the present disclosure and will not be addressed in further detail herein.

In the embodiment illustrated in FIG. 9, only one frame 220, one pair of pedestals 12, and one stringer element 16 are shown. A second pair of pedestals 12, stringer element 16, floor panel 18 (FIG. 1), and frame 220 which are identical to the illustrated structure form part of one section of a raised floor system but are not shown for sake of clarity.

Support bracket 220 is preferably stamped out of a flat metal stock and is configured and dimensioned to depend from an adjacent pair of pedestals 12 of a raised floor assembly. However, it is envisioned that for different applications, support bracket may be formed of materials having other cross-sectional geometries, such as for example, round stock.

Support bracket 220 is particularly adapted to be installed in an existing raised floor assembly, such as the one illustrated in FIG. 1. However, support bracket 220 advantageously does not require the removal or substitution of the existing stringer elements 16 of the raised floor assembly. Installation of frames 220 does not alter the configuration or compromise the existing raised floor assembly.

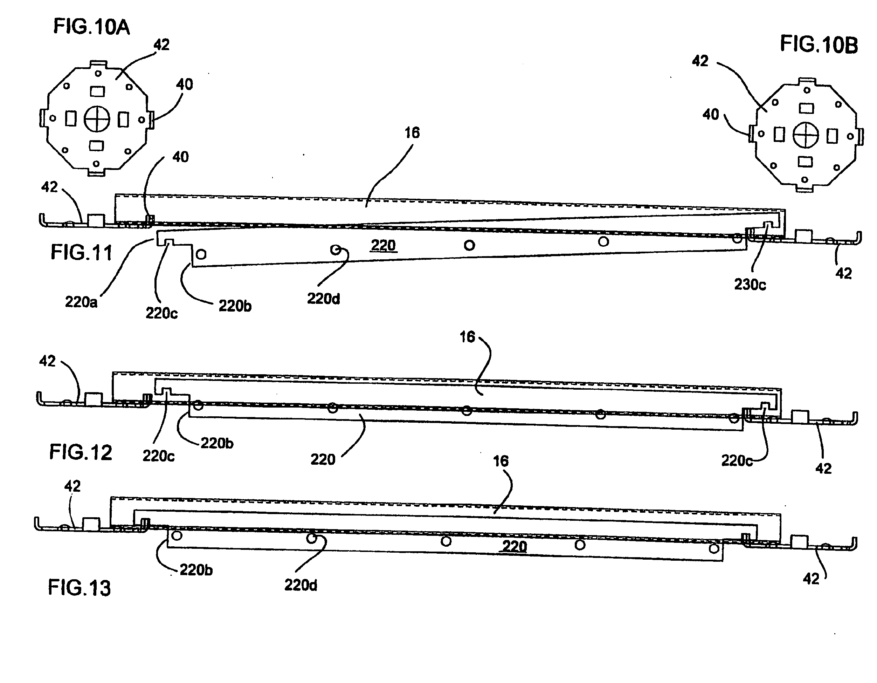

Referring to FIGS. 10A-13, support bracket 220 includes an upper portion 220a and a lower portion 220b. Lower portion 220b extends downwardly away from upper portion 220a. Support bracket 220 includes notches 220c formed in the lower edges of transversely extending portions which extend out each end of support bracket 220.

To install support bracket 220, as shown in FIG. 11, a first end is inserted in the U-shaped opening of stringer element 16 and passed over bracket portion 40 of stanchion base plate 42. Support bracket 220 is slid over until the second end is clear of bracket portion 40 of stanchion base plate 42 of the adjacent pedestal 12. As shown in FIG. 12, the second end of support bracket 220 is elevated until the transversely extended portion is clear of the top of bracket portion 40. Finally, as shown in FIG. 13, support bracket 220 is moved so that notches 220c align with the respective bracket portions 40 of stanchion base plates 42 and support bracket is lowered so that notches 220c rest on the respective bracket portions 40.

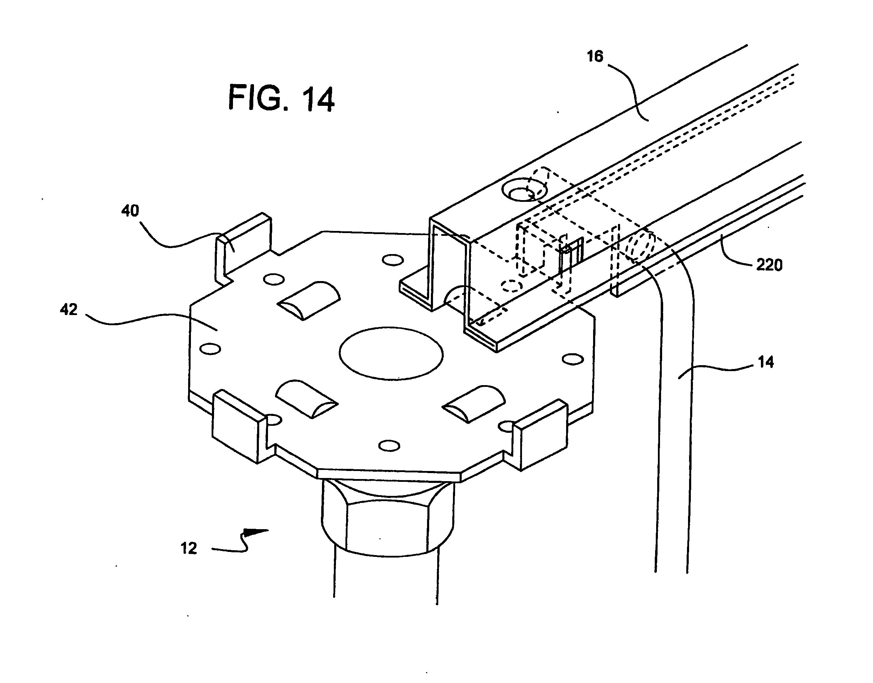

In this manner, mounting holes which are formed in the lower portion 220b are situated below the bottom of stringer elements 16. Thus, as shown in FIG. 14, basket 14 may then be inserted in a similar fashion as shown and described with respect to the embodiment of FIG. 6. Once installed, basket 14 is locked in place.

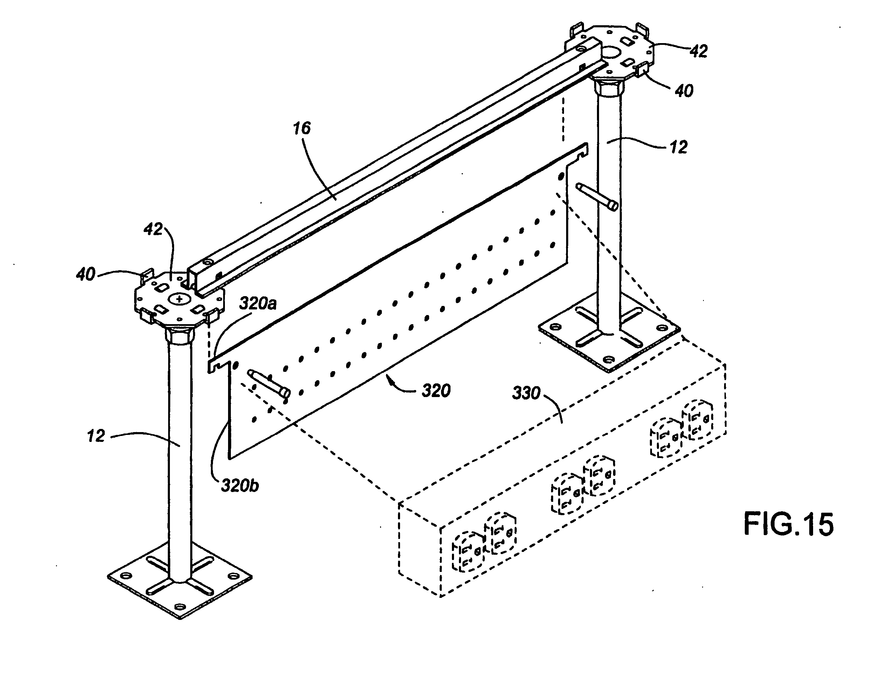

A further embodiment of a support apparatus for use in conjunction with a raised floor assembly is illustrated in FIG. 15 as support bracket 320. Support bracket 320 includes similar mounting structure to support bracket 220. Support bracket 320 includes lower portion 320 which extends downwardly a predetermined distance from upper portion 320a. Lower portion 320b may be any desired length up to the limit imposed by whatever surface, be it planar or irregular, is between adjacent pedestals 12. Thus, lower portion 320b provides a mounting surface which is suspended above the surface which the raised floor assembly is positioned over. In this manner, a variety of articles may be supported below the floor panels of the raised floor assembly but above the surface upon which the raised floor assembly rests. For example, a power strip 330 may be mounted to support bracket 320.

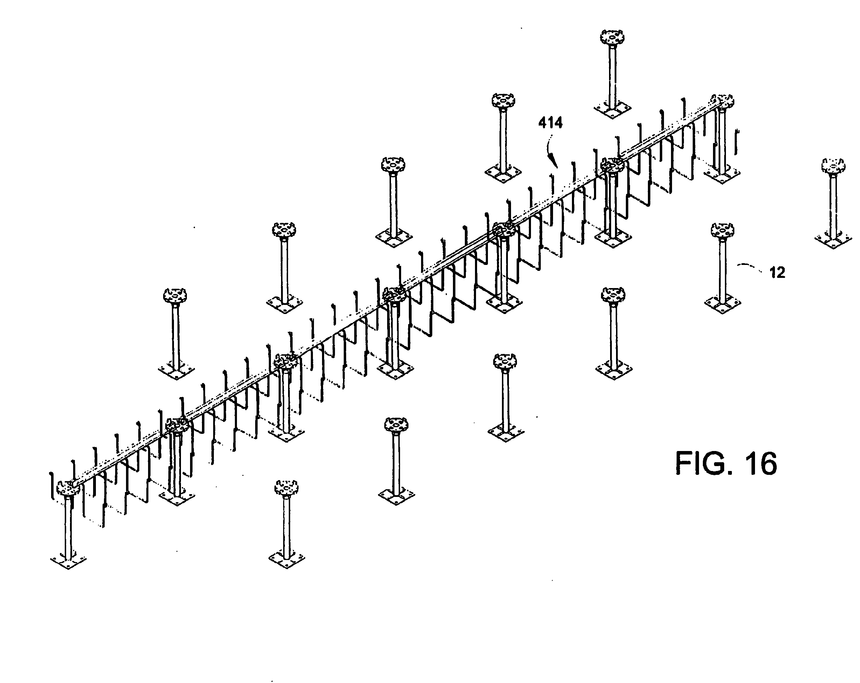

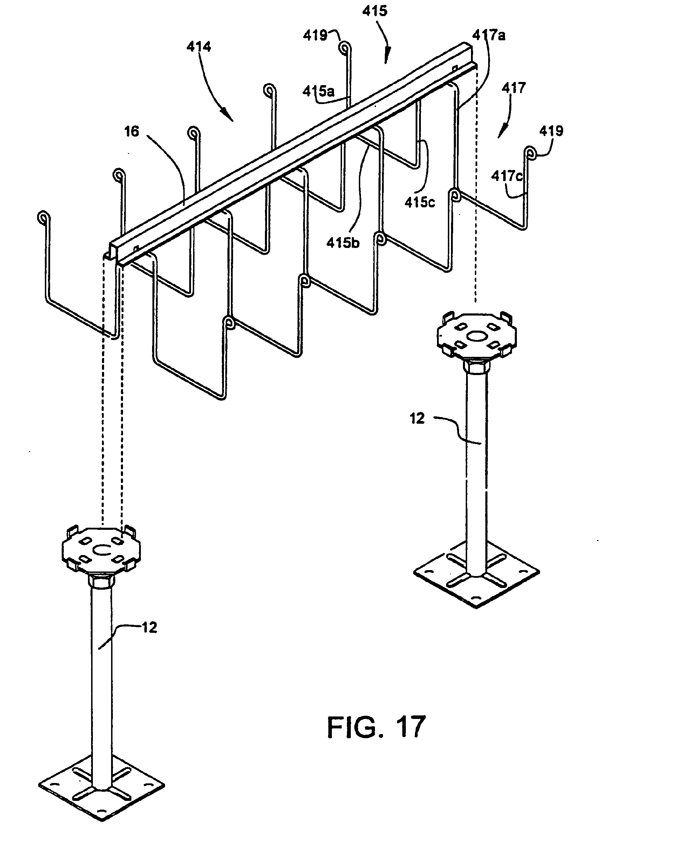

Referring to FIG. 16, an alternative embodiment of a cable support assembly as incorporated in the structural support system of a raised floor system is shown disposed along a single linear array of stanchions 12 of a raised floor system. As shown in FIG. 17, a cable support assembly section 414 defines two separate cable support pathways which are defined by a series of spaced apart cable support bracket members each having a pair of partially enclosed areas 415 and 417 defined by segments 415a, 415b, 415c; and 417a, 417b, 417c, respectively. The cable support brackets are preferably formed of stock which is readily formed into the desired shape such as illustrated in FIG. 17, for example, wire stock. Each of the cable support brackets are provided with a loop section 419 at the outboard ends of the partially enclosed areas 415 and 417. Loop sections 419 may be formed such that the loop is oriented outwardly from the partially enclosed areas 415 and 417, as illustrated in FIG. 17, or loops 419 may be formed to be oriented facing inwardly in the partially enclosed areas.

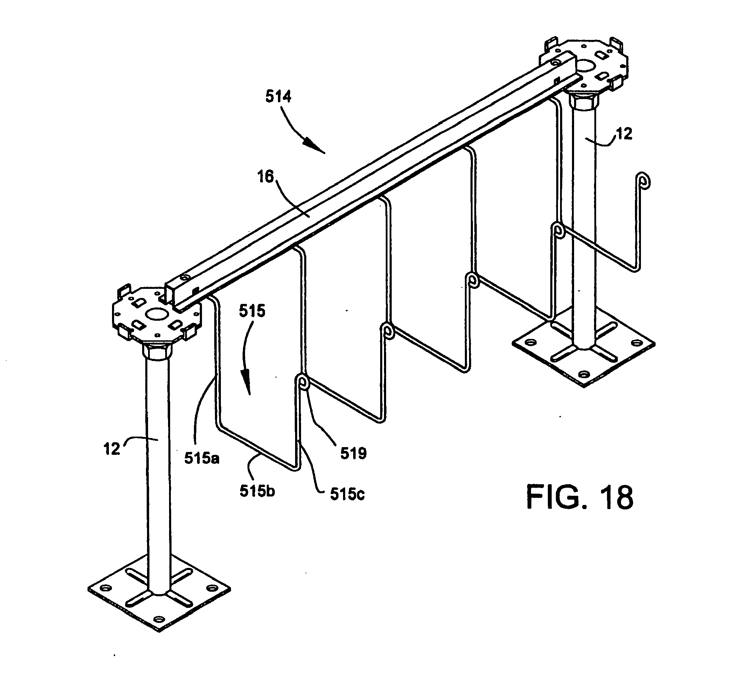

FIG. 18 illustrates a further alternative embodiment of a cable support assembly section 514 which is similar to cable support assembly section 414 of FIG. 17 except that a single cable pathway is defined by a series of cable bracket members secured to a stinger element 16. Each of the cable support bracket members include a partially enclosed area 515 defined by segments 515a, 515b, and 515c. A loop portion 519 is also formed at the outboard end of the partially enclosed area 515 and may be formed as noted above with respect to FIG. 17.

## Claims

1. A support apparatus for use with a raised floor system (10) including a plurality of support pedestals (12) and floor panels (18), the support apparatus comprising:
a support bracket which (220) includes:
a first end portion;
a second end portion, the first and second end portions being configured and dimensioned to rest upon at least a portion (42) of a support pedestal (12) of a raised floor system and beneath a floor panel of the raised floor system; and
an intermediate portion extending between the first and second end portions; **characterized in that** it comprises:
an article support member (14,114) depending from the intermediate portion to support articles thereon a distance below the raised floor panels (18) and a distance above a base (13), that said at least a portion (42) of a support pedestal (12) has a brachet portion (40), that said first and second end portions of each support brachet (220) have each a note that said notches are configured to align with the respective bracket align with the respective bracket portions (40) for making the notches (220c) resting on the respective bracket portions (40) by lowering the support bracket.

2. The raised floor system as recited in claim 1, **characterized in that** said article support member comprises, and that the channel section (14, 114) defines a plurality of openings therein.

3. The raised floor system as recited in claim 1 or 2, **characterized in that** said article support member comprises, and that the channel section is formed of wire stock.

4. The raised floor system a recited in any of claims 1 through 3, **characterized in that** said article support member comprises a channel section suspended from at least one elongated stringer element (20,120,22,122), the channel section being configured and dimensioned to support lengths of cable thereon, and that the channel section includes a plurality of support members (24) extending from a first elongated stringer element (20, 120) to a second elongated stringer element (22, 122).

5. The raised floor system as recited in claim 4, **characterized in that** the plurality of support members (24) are maintained at a predetermined distance from each other.

6. The raised floor system as recited in claim 5, wherein the predetermined distance is substantially uniform.

7. The raised floor system as recited in any of claims 2 through 6, **characterized in that** the channel section is suspended from a first and second elongated stringer elements (20, 120, 22, 122) by permanently securing the channel section to the first and second elongated stringer elements.

8. A support apparatus according to claim 1,
**characterized in that** it comprises a first and second said support bracket (220), and that a said article support member (14, 114) depends from said first and second support bracket (220).

9. A method of installing a support apparatus in a raised floor system (10) including a plurality of support pedestals (12) and floor panels (18), comprising the steps of:
inserting a first end portion of a support bracket (220) configured and dimensioned to fit in an opening defined at least partially by a portion of a first support pedestal (12) disposed beneath a floor panel;
moving the first end portion of the support bracket laterally towards the first support pedestal (12) such that a second end portion of the support bracket (220) moves away from a second support pedestal (12) spaced a predetermined distance away from the first support pedestal;
elevating the second end portion of the support bracket into horizontal alignment with an opening defined at least partially by a portion of the second support pedestal; and
moving the second end portion of the support apparatus toward the second support pedestal such that the first and second end portions of the support apparatus are positioned in the respective openings defined at least partially by portions of the first and second support pedestals, **characterized by** a further step of:
lowering said support brackets (220) having notches (220c) in lower edges of said first and second en portions there of for making said notches (220c) resting on respective brachet portions (40) on the respective support pedestal (12).

## Patentansprüche

1. Stützvorrichtung zur Verwendung mit einem angehobenen Bodensystem (10) mit mehreren Stützfüßen (12) und Bodenplatten (18), die Stützvorrichtung umfassend:
einen Stützträger (220) mit:
einem ersten Endabschnitt;
einem zweiten Endabschnitt, wobei die ersten und zweiten Endabschnitte zum Ruhen auf zumindest einem Abschnitt (42) eines Stützfußes (12) eines angehobenen Bodensystems und unter einer Bodenplatte des angehobenen Bodensystems konfiguriert und bemessen sind; und
einem zwischenliegenden Abschnitt, der zwischen den ersten und zweiten Abschnitten verläuft; **dadurch gekennzeichnet, dass** sie Folgendes umfasst:
ein Artikelstützglied (14, 114), das von dem zwischenliegenden Abschnitt zum Stützen von Artikeln darauf in einem Abstand unter den angehobenen Bodenplatten (18) und einem Abstand über einer Basis (13) abhängt, dass der zumindest eine Abschnitt (42) eines Stützfußes (12) einen Trägerabschnitt (40) aufweist, dass die ersten und zweiten Endabschnitte jeden Stützträgers (220) jeder eine Kerbe (220c) in der Unterkante davon aufweisen, und dass die Kerben dazu konfiguriert sind, sich an den jeweiligen Trägerabschnitten (40) auszurichten, um die Kerben (220c) durch Absenken des Stützträgers auf den jeweiligen Trägerabschnitten (40) ruhen zu lassen.

2. Angehobenes Bodensystem nach Anspruch 1, **dadurch gekennzeichnet, dass** das Artikelstützglied einen Kanalteilabschnitt umfasst, der von zumindest einem Längsträgerelement (20, 120, 22, 122) abhängt, wobei der Kanalteilabschnitt zum Stützen von Kabellängen darauf konfiguriert und bemessen ist, und dass der Kanalteilabschnitt (14, 114) mehrere Öffnungen darin definiert.

3. Angehobenes Bodensystem nach einem der Ansprüche 1 oder 2, **dadurch gekennzeichnet, dass** das Artikelstützglied einen Kanalteilabschnitt umfasst, der von zumindest einem Längsträgerelement (20, 120, 22, 122) abhängt, wobei der Kanalteilabschnitt zum Stützen von Kabellängen darauf konfiguriert und bemessen ist, und dass der Kanalteilabschnitt aus Drahtmaterial ausgebildet ist.

4. Angehobenes Bodensystem nach einem der Ansprüche 1 bis 3, **dadurch gekennzeichnet, dass** das Artikelstützglied einen Kanalteilabschnitt umfasst, der von zumindest einem Längsträgerelement (20, 120, 22, 122) abhängt, wobei der Kanalteilabschnitt zum Stützen von Kabellängen darauf konfiguriert und bemessen ist, und dass der Kanalteilabschnitt mehrere Stützglieder (24) enthält, die von einem ersten gestreckten Längsträgerelement (20, 120) zu einem zweiten gestreckten Längsträgerelement (22, 122) verlaufen.

5. Angehobenes Bodensystem nach Anspruch 4, **dadurch gekennzeichnet, dass** die mehreren Stützglieder (24) in einem vorgegebenen Abstand zueinander erhalten sind.

6. Angehobenes Bodensystem nach Anspruch 5, wobei der vorgegebene Abstand im Wesentlichen einheitlich ist.

7. Angehobenes Bodensystem nach einem der Ansprüche 2 bis 6, **dadurch gekennzeichnet, dass** der Kanalteilabschnitt von einem ersten und zweiten gestreckten Längsträgerelement (20, 120, 22, 122) durch dauerhaftes Befestigen des Kanalteilabschnitts an dem ersten und zweiten gestreckten Längsträgerelement abhängt.

8. Stützvorrichtung nach Anspruch 1, **dadurch gekennzeichnet, dass** sie einen ersten und zweiten des Stützträgers (220) umfasst, und dass eines der Artikelstützglieder (14, 114) von dem ersten und zweiten Stützglied (220) abhängt.

9. Verfahren zum Einrichten einer Stützvorrichtung in einem angehobenen Bodensystem (10) mit mehreren Stützfüßen (12) und Bodenplatten (18), folgende Schritte umfassend:
Einfügen eines ersten Endabschnitts eines Stützträgers (220), der zum Passen in eine Öffnung konfiguriert und bemessen ist, welche zumindest teilweise durch einen Abschnitt eines ersten Stützfußes (12) definiert ist, der unterhalb einer Bodenplatte angeordnet ist;
derartiges Bewegen des ersten Endabschnitts des Stützträgers seitlich zum ersten Stützfuß (12) hin, dass sich ein zweiter Endabschnitt des Stützträgers (220) von einem zweiten Stützfuß (12), der in einem vorgegebenen Abstand vom ersten Stützfuß beabstandet ist, weg bewegt;
Anheben des zweiten Endabschnitts des Stützträgers in horizontale Ausrichtung mit einer Öffnung, die zumindest teilweise durch einen Abschnitt des zweiten Stützfußes definiert ist; und
derartiges Bewegen des zweiten Endabschnitts der Stützvorrichtung zum zweiten Stützfuß hin, dass der erste und zweite Endabschnitt der Stützvorrichtung in den jeweiligen Öffnungen angeordnet sind, die zumindest teilweise durch Abschnitte des ersten und zweiten Stützfußes definiert sind,
**gekennzeichnet durch** einen weiteren Schritt des
Absenkens der Stützträger (220) mit Kerben (220c) in Unterkanten des ersten und zweiten Endabschnitts davon, um die Kerben (220c) auf jeweiligen Trägerabschnitten (40) am jeweiligen Stützfuß (12) ruhen zu lassen.

## Revendications

1. Dispositif de support à utiliser avec un système (10) de plancher surélevé, comprenant une pluralité de pieds (12) de support et des panneaux (18) de plancher, le dispositif de support comprenant :
une console (220) de support qui comporte :
une première partie d'extrémité ;
une deuxième partie d'extrémité, la première et la deuxième parties d'extrémité étant configurées et dimensionnées pour reposer sur au moins une partie (42) d'un pied (12) de support d'un système de plancher surélevé et en dessous d'un panneau de plancher du système de plancher surélevé ; et
une partie intermédiaire s'étendant entre la première et la deuxième parties d'extrémité ;
**caractérisé en ce qu'**il comprend :
un élément (14, 114) de support d'article pendant de la partie intermédiaire pour y supporter des articles à une distance en dessous des panneaux (18) de plancher surélevé et à une distance au-dessus d'un socle (13), la au moins une partie (42) d'un pied (12) de support ayant une partie (40) de console, les première et deuxième parties d'extrémité de chaque console (220) de support ayant chacune une encoche (220c) dans son bord inférieur et les encoches étant configurées pour s'aligner avec les parties (40) respectives de console pour faire que les consoles (220c) reposent sur les parties (40) respectives de console en abaissant la console de support.

2. Système de plancher surélevé suivant la revendication 1, **caractérisé en ce que** l'élément de support d'article comprend une section de canal suspendue d'au moins un élément (20, 120, 22, 122) oblong de gouttière, la section de canal étant configurée et dimensionnée pour y supporter des longueurs de câble et **en ce que** la section de canal (14, 114) définit en son sein une pluralité d'ouvertures.

3. Système de plancher surélevé suivant la revendication 1 ou 2, **caractérisé en ce que** l'élément de support d'article comprend une section de canal suspendue d'au moins un élément (20, 120, 22, 122) oblong de gouttière, la section de canal (14, 114) étant configurée et dimensionnée pour y supporter des longueurs de câble et **en ce que** la section de canal est formée de matière de fil.

4. Système de plancher surélevé suivant l'une quelconque des revendications 1 à 3, **caractérisé en ce que** l'élément de support d'article comprend une section de canal suspendue d'au moins un élément (20, 120, 22, 122) oblong de gouttière, la section de canal (14, 114) étant configurée et dimensionnée pour y supporter des longueurs de câble, et **en ce que** la section de canal comprend une pluralité d'éléments (24) de support s'étendant d'un premier élément (20, 120) oblong de gouttière à un deuxième élément (22, 122à) oblong de gouttière.

5. Système de plancher surélevé suivant la revendication 4, **caractérisé en ce que** la pluralité d'éléments (24) de support sont maintenus à une distance déterminée à l'avance les uns des autres.

6. Système de plancher surélevé suivant la revendication 5, dans lequel la distance déterminée à l'avance est sensiblement uniforme.

7. Système de plancher surélevé suivant l'une quelconque des revendications 2 à 6, **caractérisé en ce que** la section de canal est suspendue d'un premier et d'un deuxième éléments (20, 120, 22, 122) oblongs de gouttière, en fixant en permanence la section de canal au premier et au deuxième éléments oblongs de gouttière.

8. Système de plancher surélevé suivant la revendication 1, **caractérisé en ce qu'**il comprend une première et une deuxième consoles (220) de support et **en ce que** l'élément (14, 114) de support d'article pend de la première et de la deuxième consoles (220) de support.

9. Procédé d'installation d'un dispositif de support dans un système (10) de plancher surélevé, comprenant une pluralité de pieds (12) de support et des panneaux (18) de plancher, comprenant les stades dans lesquels :
on insère une première partie d'extrémité d'une console (220) de support configurée et dimensionnée pour s'adapter dans une ouverture définie au moins partiellement par une partie d'un premier pied (12) de support disposé en dessous d'un panneau du plancher ;
on déplace la première partie d'extrémité de la console de support latéralement vers le premier pied (12) de support, de manière à éloigner une deuxième partie d'extrémité de la console (220) de support d'un deuxième pied (12) de support éloigné d'une distance déterminée à l'avance du premier pied de support ;
on soulève la deuxième partie d'extrémité de la console de support pour la mettre en alignement horizontal avec une ouverture définie au moins en partie par une partie du deuxième pied de support ; et
on déplace la deuxième partie d'extrémité du dispositif de support vers le deuxième pied de support, de manière à mettre les première et deuxième parties d'extrémité du dispositif de support en position dans les ouvertures respectives définies au moins partiellement par des parties des premier et deuxième pieds de support ;
**caractérisé par** un stade supplémentaire dans lequel :
on abaisse les consoles (220) de support ayant des encoches (220c) dans des bords inférieurs de leurs première et deuxième parties d'extrémité pour faire que ces encoches (220c) reposent sur des parties (40) respectives de console sur le pied (12) respectif de support.
